# EUROPÄISCHE PATENTSCHRIFT

(11) **EP 4 012 377 B1**
(45) Veröffentlichungstag und Bekanntmachung des Hinweises auf die Patenterteilung: **24.04.2024**
(21) Anmeldenummer: 20212710.6
(22) Anmeldetag: 09.12.2020
(51) Int. Cl.: G01N 15/02, G01N 15/14, G01N 15/00

(54) **VORRICHTUNG UND VERFAHREN ZUR ERFASSUNG VON PARTIKELN IN FLUID-GEMISCHEN UND GAS-GEMISCHEN**
DEVICE AND METHOD FOR THE DETECTION OF PARTICLES IN FLUID MIXTURES AND GAS MIXTURES
DISPOSITIF ET PROCÉDÉ DE DÉTECTION DES PARTICULES DANS DES MÉLANGES DE FLUIDES ET DES MÉLANGES DE GAZ

(43) Veröffentlichungstag der Anmeldung: 15.06.2022
(73) Patentinhaber: Wilde, Axel, 45149 Essen (DE)
(72) Erfinder: Wilde, Axel, 45149 Essen (DE)
(74) Vertreter: Zenz Patentanwälte Partnerschaft mbB

(56) Entgegenhaltungen:
- US-A- 5 422 712
- US-A- 5 457 526
- US-A- 5 548 395
- US-A- 5 633 503
- US-A- 6 115 119

## Beschreibung

Die Erfindung betrifft eine Vorrichtung und ein Verfahren zur Analyse von Fluid-Gemischen, in welchen Partikel mitgeführt werden. Dabei werden die Fluid-Gemische mittels optischer Verfahren ausgewertet, um die Anzahl- und Größenverteilung von Partikeln in den Fluid-Gemischen zu erfassen.

Der Begriff Fluid-Gemische bezeichnet dabei alle Arten von Flüssigkeiten und Gasen, die wenigstens eine Art Trägerfluid und darin mitgeführte Partikel aufweisen. Trägerfluid und Partikel unterscheiden sich in ihren optischen Eigenschaften, es kann sich jedoch sowohl beim Trägerfluid als auch bei den Partikeln grundsätzlich um trennbare Fluide handeln, die Partikel können jedoch auch organische oder anorganische Feststoffe sein, wobei unterschiedliche Arten von Partikeln enthalten sein können.

Im Rahmen dieser Anmeldung sind entsprechend unter dem Begriff Fluid alle Gase und Flüssigkeiten zusammengefasst, soweit diese förderfähig sind und optisch wenigstens in Abschnitten des sichtbaren Spektrums oder des Infrarotspektrums oder UV-Spektrums teilweise transparent sind. Der Begriff Partikel fasst alle in solchen Fluiden mitführbaren, räumlich begrenzten Strukturen zusammen, soweit diese optisch von dem Trägerfluid unterscheidbar sind und im Trägerfluid räumlich begrenzt bleiben. Dies umfasst entsprechend z.B. anorganische Partikel, organische Partikel und anorganische und organische Agglomerate, Gasblasen oder auch Fluid-Tropfen von anderer Art als das Trägerfluid etc.

In der Technik bekannte optische Verfahren für derartige Analysen sind unter anderem Messungen der Lichtblockade (light obscuration) und auch bildgebende Verfahren, wie Flow Imaging-Verfahren. Eine Sonderrolle nimmt dabei die Lichtblockade ein, die von zahlreichen Behörden als Test zur Freigabe von Produktionschargen verlangt wird. Demgegenüber wird Flow Imaging als zusätzliche Methode empfohlen, da diese Methode die Bestimmung der Größenverteilung von Partikeln zuverlässiger erfasst. Insbesondere bei Partikeln, deren optische Eigenschaften denjenigen des Trägerfluids (also des Fluids in dem die Partikel mitgeführt werden) nahekommen, kann Flow Imaging zuverlässigere Analysen von Größenverteilungen ermöglichen und außerdem noch Aussagen zu der Morphologie von Partikeln liefern. Dennoch ist diese Methode keine freigaberelevante Methode. Unter Partikeln sind in diesem Kontext grundsätzlich alle begrenzten Substanzbereiche innerhalb des Trägerfluids zu verstehen, unabhängig davon, ob es sich um organische Stoffe, anorganische Stoffe oder Flüssigkeiten handelt, die sich in dem Trägerfluid nicht lösen.

Es gibt auch Analysemethoden, die sowohl die Lichtblockade als auch das Flow Imaging zur Analyse derselben Proben einsetzen. Beide Methoden liefern dann eine Größenverteilung der Partikel, die mehr oder minder übereinstimmen. Dabei ist relevant, dass für eine Kalibrierung der Verfahren üblicherweise eine Messung an sogenannten Polystyrol Beads vorgenommen wird. Derartige Kalibrierkörper können mit unterschiedlicher mittlerer Korngröße erworben werden und dienen dann zur Kalibrierung der genannten Verfahren. Bei Partikeln, die in ihren optischen Eigenschaften, aber auch ihrer Morphologie und ihrer Größe signifikant von den Kalibriermaterialien abweichen, führen diese Unterschiede jedoch zu erheblichen Abweichungen gegenüber den realen Partikelcharakteristika, insbesondere wenn die Lichtblockade betrachtet wird. Es ist also für das Ergebnis der Analyse wichtig, wie die Vorrichtung zur Analyse kalibriert wurde. Demgegenüber sind Verfahren mittels Flow Imaging robuster gegen solche systematischen Fehler, was sich in einer abweichenden Größenverteilungserfassung der Techniken auch bei Betrachtung derselben Probe niederschlägt.

Die Analyse einer Probe mittels beider Verfahren erfordert größere Probenmengen und zusätzlichen Zeitaufwand. Außerdem sind die Durchführungen mehrerer serieller Analysen hinsichtlich Zeit- und Personalaufwand anspruchsvoller und erfordern Wartungstätigkeiten an jeder Einrichtung.

Aus dem Dokument US 6,115,119 A ist eine Untersuchungsvorrichtung mit einer Fluoreszenz-Durchflusskammer mit Einlass und Auslass bekannt. Eine Lichtquelle wird verwendet, um Licht durch eine Abbildungsoptik einzustrahlen. Fluoreszenzemissionen der Partikel werden mit Hilfe von Emissionsfiltern und einer Photomultiplier-Röhre überwacht. Die Steuerung soll dabei sicherstellen, dass das Signal des Lichtdetektors die Beleuchtungs-LED triggert, wobei die LED erst nach dem nächsten vertikalen Synchronisationssignal des Videos aufleuchten soll, wodurch ein klares Bild entstehen soll.

Das Dokument US 5,422,712 A beschreibt eine Vorrichtung zur Analyse von Partikeln in einer flüssigen Probe und umfasst eine Lichtquelle zur Beleuchtung des Flüssigkeitsstroms der Probe mit Fluoreszenzanregungslicht. Ein Prisma mit Beugungsgitter wird verwendet, um ein Spektrum der von den Partikeln emittierten Fluoreszenz zu erzeugen, welches mit einem Bildverstärker verstärkt wird. Die Intensität der verschiedenen Wellenlängen des Fluoreszenzspektrums wird von einem Bildsensor gemessen, der für jedes Teilchen neu eingestellt wird. Ein Lichtdetektor erfasst das vom Teilchen gestreute Licht oder das durch das Teilchen hindurchgehende Licht und ist so angeordnet, dass er vorwärts oder seitlich gestreutes Licht und vorwärts oder rückwärts gerichtete Fluoreszenz erfasst.

Der Erfindung liegt die Aufgabe zugrunde, eine verbesserte Vorrichtung und ein verbessertes Verfahren zur Analyse von Partikeln in Fluid-Gemischen bereitzustellen, welches eine bessere Vergleichbarkeit unterschiedlicher Messmethoden erlaubt.

Die Aufgabe wird erfindungsgemäß gelöst durch eine Vorrichtung mit den Merkmalen des Patentanspruches 1 sowie ein Verfahren mit den Merkmalen des Patentanspruches 8.

Gemäß der Erfindung werden sowohl die Messmethode der Lichtblockade (light obscuration) als auch des Flow Imaging simultan und synchronisiert an derselben Probe und anhand einheitlicher optischer Informationen durchgeführt. Dazu wird die Probe mit einer Lichtquelle beleuchtet und durchleuchtet. Das Fluid-Gemisch mit den darin mitgeführten Partikeln, also bestehend aus Trägerfluid und einheitlichen oder unterschiedlichen Partikeln, wird einer Fluid-Kammer zugeführt und durchströmt diese. Die Fluid-Kammer ist für wenigstens einen gewissen Spektralbereich des Lichtes der Beleuchtungseinrichtung transparent. Das von der beleuchteten Fluid-Kammer ausgehende Licht wird einer Abbildungsoptik zugeführt. Diese Abbildungsoptik enthält zumindest einen Strahlteiler, der das Licht in einen ersten Strahlteil und einen zweiten Strahlteil aufteilt. In dem nachgeordneten Strahlengang des ersten Strahlteils wird, neben gegebenenfalls weiteren Elementen der Abbildungsoptik, eine digitale Kamera in den Strahlengang gebracht. Diese digitale Kamera nimmt einen beleuchteten Abschnitt der Fluid-Kammer auf. Es kann sich bei dieser Kamera um eine beliebige Art von Kamera mit elektronischer Erfassung handeln, wie sie im Bereich des Flow Imaging üblicherweise zum Einsatz kommt, beispielsweise eine CCD-Kamera.

Der vom Strahlteiler ausgehende zweite Strahlteil wird, wiederum gegebenenfalls unter Beeinflussung weiterer Elemente der Abbildungsoptik, einem Zeilen-Array von fotosensitiven Erfassungselementen zugeführt. In diesem Zeilen-Array sind mehrere fotosensitive Erfassungselemente derart angeordnet und ausgerichtet, dass ein Bereich der Kammer durch dieses Zeilen-Array erfasst wird, welches auch auf die Kamera abgebildet wird. Das Zeilen-Array ist dabei so orientiert, dass die Zeile in Richtung der abgebildeten Strömungsrichtung verläuft, dass also jedes Element des Zeilen-Arrays einen anderen Strömungsabschnitt erfasst. Es ist im Rahmen der Erfindung möglich, weitere Zeilen-Arrays zur gleichzeitigen oder wechselweisen Erfassung anzuordnen, um auf diese Weise zweidimensionale Array-Strukturen bereitzustellen.

Die fotosensitiven Elemente des Zeilen-Arrays sind Elemente, die einzeln auslesbar sind und jeweils einen Intensitätswert der auftreffenden Strahlung erfassen. Dadurch, dass überlappende Abschnitte der Fluid-Kammer sowohl auf das Zeilen-Array als auch auf die digitale Kamera abgebildet werden, ist verschiedenen Bildbereichen, die in einem von der digitalen Kamera aufgenommenen Einzelbild aufgenommen werden ein Wert eines fotosensitiven Erfassungselementes des Zeilen-Arrays zugeordnet.

Eine Steuereinrichtung ist sowohl mit der digitalen Kamera als auch dem Zeilen-Array gekoppelt und steuert beide Geräte zur zeitgleichen Erfassung an. Unter zeitgleicher Erfassung ist hier zu verstehen, dass eine mit der digitalen Kamera gemachte Aufnahme einem Werte-Array sämtlicher einzelnen fotosensitiven Erfassungselemente des Zeilen-Arrays zugeordnet werden kann. Die Messung der Lichtblockade und des Flow Imaging wird also anhand derselben optischen Information aus demselben Zustand der Fluid-Kammer, beleuchtet von derselben Beleuchtungsquelle und außerdem zeitgleich vorgenommen und es können in-situ oder nachträgliche Paare von aufgenommenen Bildern der digitalen Kamera zu synchronisierten Werten der Intensitätsverteilung auf dem Zeilen-Array einander zugeordnet werden.

Diese Anordnung hat Vorteile, da zeitgleich eine freigaberelevante Methode der Lichtblockade erfasst und ausgewertet wird, deren Ergebnisse jedoch durch die simultan erfassten Bilddaten ergänzt, verifiziert und sogar korrigiert werden kann. Unsicherheiten bezüglich der Ergebnisse der Methode der Lichtblockade, insbesondere bei komplizierten Partikelsorten oder breiten Größenverteilungen, können durch die weitere Methode reduziert werden. Bei der weiteren Auswertung können beispielsweise Resultate der Flow Imaging-Komponente separat ausgewertet werden und den Ergebnissen der Lichtblockade hinsichtlich der Größenverteilung gegenübergestellt werden, so dass eine komplexere, vergleichende Analyse möglich wird.

Das System wird vor einem Einsatz wie herkömmliche Lichtblockade-Analysegeräte mit Kalibrierkörpern kalibriert, insbesondere mit Polystyrol Beads. Im Zuge einer solchen Kalibrierung kann auch die Zuordnung der Abschnitte der Fluid-Kammer zu Bildbereichen der Aufnahme der digitalen Kamera und einzelnen fotosensitiven Erfassungselementen des Zeilen-Arrays stattfinden.

Gemäß der Erfindung ist die Steuereinrichtung derart ausgebildet, dass die jeweils zeitgleich erfassten Daten der digitalen Kamera und des Zeilen-Arrays so verarbeitet werden, dass Bildabschnitte der mit der digitalen Kamera erfassten Bilddaten einzelnen fotosensitiven Erfassungselementen des Zeilen-Arrays zugeordnet werden. In dieser Ausgestaltung werden Bildbereiche von Einzelbildern der digitalen Kamera in der Fluid-Kammer in Sektionen oder Streifen aufgeteilt, die solchen Bereichen entsprechen, die auf einzelne Elemente des Zeilen-Arrays im zweiten Strahlteil abgebildet werden. Ein Signal von einem einzelnen fotosensitiven Element des Zeilen-Arrays kann dann unmittelbar einem entsprechenden Bildfeld in dem erfassten Bild zugeordnet werden und es kann geprüft werden, ob eine Fehlerfassung, eine Mehrfacherfassung oder eine sonstige irreguläre Erfassung vorliegt. Außerdem können Informationen darüber erhalten werden, wie sich bestimmte Partikelmorphologien, Partikelgrößen und sonstige Partikeleigenschaften auf die Erfassung in einer Lichtblockadeeinrichtung auswirken.

In einer bevorzugten Ausführungsform der Erfindung sind Steuereinrichtung, Beleuchtungseinrichtung, digitale Kamera und Zeilen-Array derart gekoppelt, dass die Beleuchtungseinheit zur synchronisierten Beleuchtung der Fluid-Kammer mit der zeitgleichen Erfassung der digitalen Kamera und des Zeilen-Arrays angesteuert ist. Während grundsätzlich eine Beleuchtungseinrichtung mit dauerhafter, gleichbleibender Beleuchtungsintensität eingesetzt werden kann, ist für eine zeitlich hochaufgelöste Erfassung die diskontinuierliche Beleuchtung entsprechend einer Blitzaufnahme besonders geeignet. Als Beleuchtungseinrichtung können insbesondere LED-Leuchtmittel oder aufgeweitete oder gefächerte Strahlen von Laserdioden/Lasern verwendet werden, da diese Leuchtmittel bezüglich der Ansteuerung ein rasches Reaktionsvermögen und eine lange Lebensdauer zeigen. Die Beleuchtungseinrichtung kann dann von der Steuereinrichtung hinsichtlich der Beleuchtungsdauer so angesteuert werden, dass die Beleuchtungseinrichtungsaktivität die zeitliche Auflösung und die Belichtungsdauer auf der digitalen Kamera und dem Zeilen-Array für eine Aufnahme definiert. Dabei können Zeilen-Array und digitale Kamera durchaus trägere Reaktionsverhalten zeigen als die Beleuchtungseinrichtung, da bei ausbleibender Beleuchtung auch keine Belichtung erfolgt. So kann insbesondere vorgesehen sein, innerhalb eines vorgegebenen Zeitfensters das sowohl das Zeilen-Array als auch die digitale Kamera sensitiv zu schalten und innerhalb des Zeitfensters die Beleuchtungseinrichtung für eine gewünschte Zeitdauer zu aktivieren.

In einer bevorzugten Ausgestaltung der Erfindung ist das Zeilen-Array aus Fotodioden als fotosensitiven Erfassungselementen gebildet. Fotodioden sind kostengünstige und leicht verfügbare Erfassungselemente, welche gut kalibrierbar sind und danach reproduzierbare Erfassungsergebnisse aufweisen. Diese Gestaltung ist insbesondere in robusten und kostengünstigen Einrichtungen und Ausgestaltungen der Erfindung einsetzbar.

In einer Weiterbildung der Erfindung weist das Zeilen-Array eine Zeilenkamera als fotosensitive Erfassungselemente auf. Zeilenkameras sind allgemein Anordnungen aus lichtempfindlichen Elementen, die in einer Zeile angeordnet sind. Zeilenkameras sind besonders schnell auslesbar und weisen üblicherweise CCD-oder NMOS-Sensoren auf, gegebenenfalls auch CMOS-Sensoren. Bei derartigen Kameras kann außerdem zwischen monochromen Kameras und Kameras mit Farbsensoren gewählt werden, was die Einsatzmöglichkeiten noch weiter vergrößert.

Um die Abbildung auf das Zeilen-Array zu ermöglichen, weist in einer bevorzugten Ausgestaltung der Erfindung die Abbildungsoptik wenigstens eine zylindrische Linse auf, die den Strahl des zweiten Strahlteils hinter dem Strahlteiler auf das Zeilen-Array fokussiert. Die Nutzung einer zylindrischen Linse und deren Fokussierung eines aufgeweiteten Strahlbereiches auf eine Zeilenanordnung verbessert die Lichtausbeute und damit die Messgenauigkeit der gesamten Einrichtung.

Gemäß einer Weiterbildung der Erfindung ist vorgesehen, dass die vom Zeilen-Array einerseits und der digitalen Kamera andererseits erfassten Bereiche der Fluid-Zelle nicht nur überlappen, sondern das der auf das Zeilen-Array abgebildete Abschnitt der Fluid-Kammer vollständig durch die digitale Kamera erfasst ist. Der Erfassungsbereich der digitalen Kamera bezogen auf die beleuchtete Fluid-Zelle stimmt daher mit dem Abdeckungsbereich der Abbildung auf das Zeilen-Array überein oder geht über dieses einseitig oder beidseitig hinaus. Auf diese Weise ist es möglich, eine vollständige Abbildung der Zuordnung von Lichtblockadewerten zu Bildbereichen des Bildes der digitalen Kamera zu ermöglichen.

Bei dem erfindungsgemäßen Verfahren zum Erfassen von Partikeln in Fluid-Gemischen gelten die vorstehenden Vorteile und technischen Erläuterungen sinngemäß. Das Fluid-Gemisch wird zunächst durch eine Fluid-Kammer gefördert, wobei wenigstens ein Abschnitt der Fluid-Kammer mit einer Beleuchtungseinrichtung beleuchtet wird. Der beleuchtete Abschnitt der Fluid-Kammer wird abgebildet, wobei im Strahlengang von der Fluid-Kammer ein Strahlteiler eingesetzt wird, der einen ersten Strahlteil und einen zweiten Strahlteil voneinander trennt. Der erste Strahlteil wird zu einer digitalen Kamera geführt, der zweite Strahlteil wird auf ein Zeilen-Array von fotosensitiven Elementen abgebildet. Dabei ist das Zeilen-Array so ausgerichtet, dass die abgebildete Strömungsrichtung in Richtung des Zeilen-Arrays verläuft, also entlang der Längsachse des Zeilen-Arrays, so dass entlang des Zeilen-Arrays auf jedes der fotosensitiven Erfassungselemente ein anderer Lichtanteil aus dem zweiten Strahlteil fällt, welcher jeweils aus einem zugeordneten, in Strömungsrichtung begrenzten Teilabschnitt der Fluid-Kammer stammt. Die Ausrichtung der digitalen Kamera und des Zeilen-Arrays sowie der Abbildungsoptik zu der Fluid-Kammer sind derart gewählt, dass überlappende Bereiche der Fluid-Kammer auf das Zeilen-Array und die digitale Kamera abgebildet werden.

Mit dieser Anordnung werden dann synchronisierte Erfassungen von Bildern mit der digitalen Kamera und Signaldaten der fotosensitiven Erfassungselemente des Zeilen-Arrays aufgenommen.

In einer anschließenden Auswertung werden Bildbereiche von Einzelaufnahmen der digitalen Kamera den zeitgleich aufgenommenen Signalen des Zeilen-Arrays zugeordnet. Dies bedeutet zum Beispiel, dass ein von einem fotosensitiven Erfassungselement im Zeilen-Array aufgenommener Intensitätswert einem Streifen im Bild der digitalen Kamera zugeordnet wird. Da die Kamera ein zweidimensionales Bild aufnimmt, das Zeilen-Array jedoch eine eindimensionale Werte-Reihe, ist die zulassungsrelevante Messung des Zeilen-Arrays um abrufbare weitere Informationen in den Bildern der digitalen Kamera ergänzt.

Die Erfindung wird nun anhand der beiliegenden Zeichnung näher erläutert.
Figur 1 zeigt schematisch den Aufbau einer erfindungsgemäßen Vorrichtung zur Ausführung des erfindungsgemäßen Verfahrens;
Figur 2 zeigt schematisch die Zuordnung unterschiedlicher Bildbereiche einer Aufnahme der digitalen Kamera zu Signalwerten des Zeilen-Arrays;

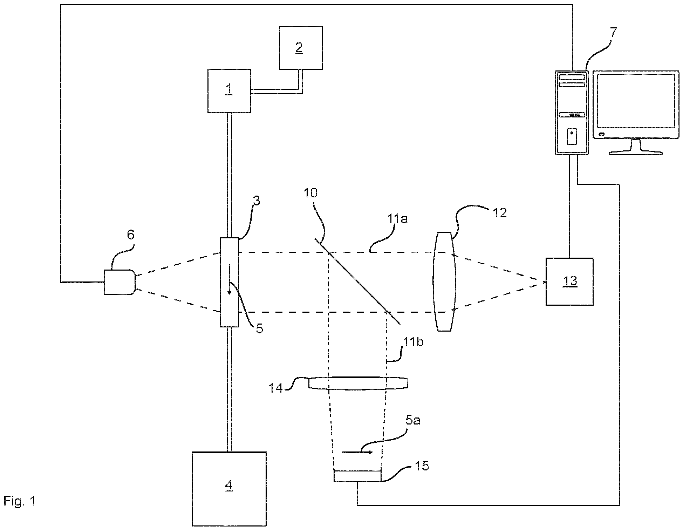

In Figur 1 ist eine Vorrichtung gemäß einem ersten Ausführungsbeispiel der Erfindung gezeigt. Eine Zuführeinrichtung 1 ist mit einem Reservoir 2 verbunden, in welchem ein Fluid-Gemisch aufgenommen ist. Das Fluid-Gemisch im Reservoir 2 enthält Partikel und ein Trägerfluid. Die Zuführeinrichtung 1 fördert das Fluid-Gemisch aus dem Reservoir 2 in eine Fluid-Kammer 3. Die Fluid-Kammer 3 ist aus einem transparenten Material gefertigt. Das Fluid durchströmt die Fluid-Kammer 3 und gelangt von dort in ein Auffangreservoir 4. In der Darstellung der Figur 1 fließt das Fluid durch die Fluid-Kammer 3 in Pfeilrichtung 5. Eine Beleuchtungseinrichtung 6 ist als LED oder LED-Anordnung ausgebildet und durchleuchtet die Fluid-Kammer 3 und das darin strömende Fluid. Die Beleuchtungseinrichtung 6 ist mit einer Steuereinrichtung 7 gekoppelt, welche die Beleuchtungseinrichtung in vorgegebenen Zeitfenstern für vorgegebene Belichtungsdauer einschaltet.

Das von der Beleuchtungseinrichtung 6 ausgehende Licht durchdringt die Fluid-Kammer 3 und trifft in der Fluid-Kammer 3 auf Partikel und das umgebende Träger-Fluid. Durch die Partikel wird das Licht teilweise blockiert, so dass der aus der Fluid-Kammer 3 austretende Lichtanteil auf der anderen Seite der Fluid-Kammer Informationen über die Partikel enthält, die sich in der Fluid-Kammer befinden. Ein Strahlteiler 10 teilt das von der Fluid-Kammer ausgehende Licht in einen ersten Strahlteil 11a und einen zweiten Strahlteil 11b.

Der erste Strahlteil 11a wird hinter dem Strahlteiler 10, der Bestandteil einer Abbildungsoptik ist, durch ein Linsenelement 12 der Abbildungsoptik auf eine Kamera 13 fokussiert. Die digitale Kamera 13 ist mit der Steuereinrichtung 7 gekoppelt, um in zeitlicher Abstimmung zu der Beleuchtung der Beleuchtungseinrichtung 6 Einzelaufnahmen von dem beleuchteten Fluid in der Fluid-Kammer 3 zu erfassen.

Der zweite Strahlteil 11b wird durch ein weiteres Linsenelement 14 der Abbildungsoptik auf das Zeilen-Array 15 fokussiert. Bei dem Linsenelement 14 handelt es sich in diesem Beispiel um eine Zylinderlinse, welche den Strahl 11b auf eine Linie in Deckung mit dem Zeilen-Array 15 fokussiert. Sowohl zwischen Beleuchtungseinrichtung 6 und Fluid-Kammer 3 als auch hinter der Fluid-Kammer 3, wie im gesamten Lichtweg und Strahlengang können weitere optische Elemente zur Strahlformung, Fokussierung und Filterung eingebracht sein. Diese sind jedoch für die Erfindung nicht wesentlich und werden daher in der Darstellung nicht gezeigt. Je nach verwendeten Komponenten kann es ebenfalls sein, dass die Abbildungsoptik 14 nicht benötigt wird.

Das Zeilen-Array 15 ist ebenfalls mit der Steuereinrichtung 7 gekoppelt und wird synchronisiert mit der digitalen Kamera 13 angesteuert, so dass zeitgleich von demselben Zustand des Fluids in der Fluid-Kammer 3 sowohl digitale Aufnahmen mit der digitalen Kamera 13 angefertigt werden als auch zeilenweise Intensitätsinformationen über das Zeilen-Array 15 mit der Methode der Lichtblockade erfasst werden. Das Zeilen-Array 15 ist dazu so ausgerichtet, dass die Strömungsrichtung 5 durch den Strahlteiler 10 und die nachfolgenden Optiken in Zeilenrichtung 5a des Zeilen-Arrays 15 abgebildet wird. Jedes in der Zeile des Zeilen-Arrays angeordnete fotosensitive Element nimmt auf diese Weise Lichtblockadeinformationen aus einem anderen Segment in Strömungsrichtung aus der Fluid-Zelle 3 auf. Die digitale Kamera 13 nimmt derweil denselben oder einen weiteren Bereich des beleuchteten Fluids in der Fluid-Kammer 3 auf, der auch auf das Zeilen-Array 15 abgebildet wird. Es ist ersichtlich, dass (bei vernachlässigbarer Lichtlaufzeit), zeitgleich sowohl Bildinformationen als auch Lichtblockadeinformationen aus demselben Zustand der Fluid-Zelle 3 und bei gleicher spektraler Beleuchtung generiert werden.

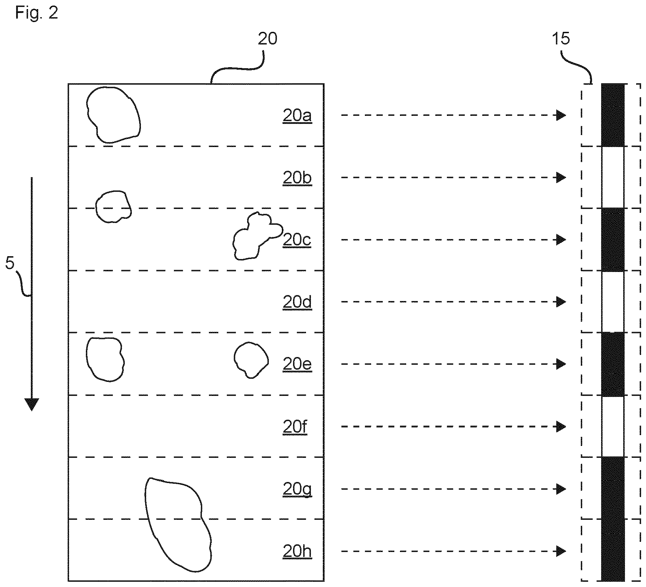

Figur 2 zeigt diesbezüglich beispielhaft ein zu einem vorgegebenen Zeitpunkt erfasstes Bild 20, welches mit der digitalen Kamera 13 unter Ansteuerung der Steuereinrichtung 7 erfasst wurde. Das Bild 20 ist beispielhaft in Strömungsrichtung 5 in eine Mehrzahl von Zeilen aufgeteilt, die mit den Bezugszeichen 20a bis 20h bezeichnet sind. Wie dargestellt, werden in den jeweiligen Zeilen 20a-20h oder deren Übergangsbereichen verschiedene Arten von Partikeln im Fluidstrom mit der Strömung mitgeführt. Die zeitsynchronisierte Aufnahme des Zeilen-Arrays 15 ergibt, korrespondierend zu den Abschnittsbereichen 20a bis 20h, jeweils Intensitätsinformationen, wobei hier zur Verdeutlichung die Intensitätsinformation in der Kategorie Hell und Dunkel angegeben sind. Es sind grundsätzlich auch Farberfassungen oder quantifizierte Intensitätsinformationen erfassbar. Wie gezeigt, lassen die in Bild 20 gezeigten Bildinformationen ergänzende Kenntnisse bezüglich der durch Lichtblockade erfassten Daten gewinnen. Beispielsweise ist in Abschnitt 20a ein Partikel enthalten, der zu einer entsprechenden Lichtblockade im Zeilen-Array 15 führt. In Abschnitt 20b ist ein Abschnitt eines kleineren Partikels im Übergangsbereich zu Abschnitt 20c enthalten, wobei der in Abschnitt 20b befindliche Anteil nicht ausreicht, um die Lichtblockade über bzw. unter einen vorgegebenen Schwellenwert zu treiben, so dass der zugehörige Abschnitt im Zeilen-Array 15 nicht blockiert ist. Die beiden Partikel aus dem Übergangsbereich des Abschnittes 20b in den Abschnitt 20c und der weitere Partikel in Abschnitt 20c selbst führen zu einer Blockade im entsprechenden Abschnitt zu Bereich 20c im Zeilen-Array, die Bildinformation gibt jedoch einen Hinweis darauf, dass hier zwei statt ein Partikel erfasst wurden. Entsprechendes gilt im Bereich 20e. Der Partikel, der die Bereiche 20g und 20h überspannt, führt zu einer Blockade der entsprechenden Bereiche im Zeilen-Array 15, was anhand der alleinigen Blockadeinformation jedoch die Interpretation offenließe, ob es sich hier um mehrere Partikel handelt oder um einen einzigen. Auch hier können die Bildinformationen die Interpretation erleichtern. Aus der Gesamtschau der Informationen kann eine verlässliche Auswertung von Partikelgrößen und deren Verteilung vorgenommen werden, da auch nachträglich noch die entsprechenden Daten ausgewertet werden können und die Blockadedaten anhand der Bilddaten interpretiert werden können, was gegebenenfalls zu einer veränderten Auswertung und ermittelten Größenverteilung der Partikel führt.

## Patentansprüche

1. Vorrichtung zur Erfassung von Partikeln in Fluid-Gemischen, wobei die Fluid-Gemische wenigstens ein Trägerfluid und darin mitgeführte Partikel aufweisen, wobei sich das Trägerfluid und die Partikel in ihren optischen Eigenschaften unterscheiden,
mit einer Zuführeinrichtung (1), welche stromauf einer Fluid-Kammer (3) angeordnet ist und ein Fluid-Gemisch durch die Fluid-Kammer (3) in einer Strömungsrichtung (5) fördert,
mit einer Beleuchtungseinrichtung (6), welche wenigstens einen Abschnitt der Fluid-Kammer (3) beleuchtet,
mit einer digitalen Kamera (13), die zur Erfassung des wenigstens einen Abschnitt der Fluid-Kammer (3) ausgerichtet ist,
wobei wenigstens ein optische Strahlteiler (10) als Komponente einer Abbildungsoptik (10, 12, 14) zwischen der digitalen Kamera (13) und der Fluid-Kammer (3) angeordnet ist, wobei der Strahlteiler (10) von der Fluid-Kammer (3) ausgehendes Licht in einen ersten Strahlteil (11a) und einen zweiten Strahlteil (11b) aufteilt,
wobei die digitale Kamera (13) im Strahlengang des ersten Strahlteils (11b) angeordnet ist,
**dadurch gekennzeichnet,**
**dass** ein Zeilen-Array (15) von photosensitiven Erfassungselementen im Strahlengang des zweiten Strahlteils (11b) angeordnet ist,
wobei das Zeilen-Array (15) derart ausgerichtet ist, dass die abgebildete Strömungsrichtung (5a) in Richtung des Zeilen-Arrays (15) verläuft, so dass entlang des Zeilen-Arrays (15) auf jedes der photosensitiven Erfassungselemente ein anderer Lichtanteil aus dem zweiten Strahlteil (11b) fällt, welcher jeweils aus einem zugeordneten, in Strömungsrichtung begrenzten Teilabschnitt der Fluid-Kammer (3) stammt,
wobei die digitale Kamera (13) und das Zeilen-Array (15) und die Abbildungsoptik (10, 12, 14) ausgerichtet sind, überlappende Abschnitte der Fluid-Kammer (3) zu erfassen,
wobei die digitale Kamera (13) und das Zeilen-Array (15) mit einer Steuereinrichtung (7) gekoppelt sind, welche die digitale Kamera (13) und das Zeilen-Array (15) zur zeitgleichen Erfassung ansteuert,
wobei die Steuereinrichtung (7) ausgebildet ist, die jeweils zeitgleich erfassten Daten der digitalen Kamera (13) und des Zeilen-Arrays (15) zu verarbeiten, wobei Bildabschnitte der mit der digitalen Kamera (13) erfassten Bilddaten einzelnen photosensitiven Erfassungselementen des Zeilen-Arrays (15) zugeordnet werden.

2. Vorrichtung nach Anspruch 1, wobei die Steuereinrichtung (7) mit der Beleuchtungseinrichtung (6) derart gekoppelt ist, dass die Beleuchtungseinrichtung (6) zur synchronisierten Beleuchtung der Fluid-Kammer (3) mit der zeitgleichen Erfassung der digitalen Kamera (13) und des Zeilen-Arrays (15) angesteuert ist.

3. Vorrichtung nach Anspruch 1 oder 2, wobei das Zeilen-Array (15) Photodioden als photosensitive Erfassungselemente aufweist.

4. Vorrichtung nach Anspruch 1 oder 2, wobei das Zeilen-Array (15) eine Zeilenkamera als photosensitive Erfassungselemente aufweist.

5. Vorrichtung nach einem der vorangehenden Ansprüche, wobei die Abbildungsoptik (10, 12, 14) in dem Strahlengang des zweiten Strahlteils (11b) wenigstens eine zylindrische Linse (14) zur Abbildung auf das Zeilen-Array (15) aufweist.

6. Vorrichtung nach einem der vorangehenden Ansprüche, wobei die digitale Kamera (13) und das Zeilen-Array (15) und die Abbildungsoptik (10, 12, 14) derart ausgerichtet sind, dass der auf das Zeilen-Array (15) abgebildete Abschnitt der Fluid-Kammer (3) vollständig durch die digitale Kamera (13) erfasst ist.

7. Verfahren zum Erfassen von Partikeln in Fluid-Gemischen, wobei die Fluid-Gemische wenigstens ein Trägerfluid und darin mitgeführte Partikel aufweisen, wobei sich das Trägerfluid und die Partikel in ihren optischen Eigenschaften unterscheiden, mit den Schritten:
Fördern des Fluid-Gemischs durch eine Fluid-Kammer (3),
Beleuchten wenigstens eines Abschnitts der Fluid-Kammer (3),
Abbilden der von dem Abschnitt der Fluid-Kammer (3) ausgehenden Strahlung mit einer Abbildungsoptik (10, 12, 14) auf eine digitale Kamera (13) und ein Zeilen-Array (15) von photosensitiven Erfassungselementen, wobei ein Strahlteilers (10) verwendet wird, um das von der Fluid-Kammer (3) ausgehende Licht in einen ersten und einen zweiten Strahlteil aufzuteilen, und wobei die digitale Kamera (13) im Strahlengang des ersten Strahlteils (11b) angeordnet wird, und das Zeilen-Array (15) im Strahlengang des zweiten Strahlteils (11b) angeordnet wird,
wobei das Zeilen-Array (15) ausgerichtet wird, so dass die abgebildete Strömungsrichtung in Richtung des Zeilen-Arrays (15) verläuft, so dass entlang des Zeilen-Arrays (15) auf jedes der photosensitiven Erfassungselemente ein anderer Lichtanteil aus dem zweiten Strahlteil fällt, welcher jeweils aus einem zugeordneten, in Strömungsrichtung begrenzten Teilabschnitt der Fluid-Kammer (3) stammt,
wobei die digitale Kamera (13) und das Zeilen-Array (15) und die Abbildungsoptik (10, 12, 14) ausgerichtet werden, um überlappende Abschnitte der Fluid-Kammer (3) zu erfassen,
synchronisiertes Erfassen von Bildern des Abschnitts der Fluid-Kammer (3) mit einer digitalen Kamera (13), und von Signaldaten der photosensitiven Erfassungselemente des Zeilen-Arrays (15),
wobei die jeweils zeitgleich erfassten Daten der digitalen Kamera (13) und des Zeilen-Arrays (15) verarbeitet werden, wobei Bildabschnitte der mit der digitalen Kamera (13) erfassten Bilddaten einzelnen photosensitiven Erfassungselementen des Zeilen-Arrays (15) zugeordnet werden.

8. Verfahren nach Anspruch 7, wobei die Beleuchtungseinheit zur synchronisierten Beleuchtung der Fluid-Kammer (3) mit der zeitgleichen Erfassung der digitalen Kamera (13) und des Zeilen-Arrays (15) angesteuert wird.

9. Verfahren nach Anspruch 7 oder 8, wobei der zweite Strahlteil (11b) mit wenigstens einer zylindrischen Linse (14) auf das Zeilen-Arrays (15) abgebildet wird.

## Claims

1. Device for detecting particles in fluid mixtures,
wherein the fluid mixtures comprise at least one carrier fluid and particles contained therein, wherein the carrier fluid and the particles differ in their optical properties,
with a supply device (1), which is arranged upstream of a fluid chamber (3) and conveys a fluid mixture through the fluid chamber (3) in a flow direction (5),
with an illumination device (6) which illuminates at least one section of the fluid chamber (3),
with a digital camera (13) which is aligned to detect the at least one section of the fluid chamber (3),
wherein at least one optical beam splitter (10) is arranged as a component of imaging optics (10, 12, 14) between the digital camera (13) and the fluid chamber (3), wherein the beam splitter (10) splits light emanating from the fluid chamber (3) into a first beam portion (11a) and a second beam portion (11b),
wherein the digital camera (13) is arranged in the beam path of the first beam part (11b),
**characterised in**
**in that** a row array (15) of photosensitive detection elements is arranged in the beam path of the second beam part (11b),
wherein the row array (15) is aligned such that the imaged flow direction (5a) extends in the direction of the row array (15), so that along the row array (15) a different light component from the second beam part (11b) falls on each of the photosensitive detection elements, which in each case originates from an associated subsection of the fluid chamber (3) which is limited in the flow direction,
wherein the digital camera (13) and the row array (15) and the imaging optics (10, 12, 14) are aligned to detect overlapping sections of the fluid chamber (3),
wherein the digital camera (13) and the row array (15) are coupled to a control device (7) which controls the digital camera (13) and the row array (15) for simultaneous detection,
wherein the control device (7) is designed to process the respectively simultaneously captured data of the digital camera (13) and the row array (15), wherein image sections of the image data captured by the digital camera (13) are assigned to individual photosensitive capture elements of the row array (15).

2. Device according to claim 1, wherein the control device (7) is coupled to the illumination device (6) in such a way that the illumination device (6) is controlled for synchronised illumination of the fluid chamber (3) with the simultaneous detection of the digital camera (13) and the row array (15).

3. Device according to claim 1 or 2, wherein the row array (15) comprises photodiodes as photosensitive detection elements.

4. Device according to claim 1 or 2, wherein the row array (15) comprises a line scan camera as photosensitive detection elements.

5. Device according to any one of the preceding claims,
wherein the imaging optics (10, 12, 14) in the beam path of the second beam portion (11b) comprises at least one cylindrical lens (14) for imaging onto the row array (15).

6. Device according to one of the preceding claims, wherein the digital camera (13) and the row array (15) and the imaging optics (10, 12, 14) are aligned such that the section of the fluid chamber (3) imaged onto the row array (15) is completely captured by the digital camera (13).

7. Method for detecting particles in fluid mixtures,
wherein the fluid mixtures comprise at least one carrier fluid and particles contained therein, wherein the carrier fluid and the particles differ in their optical properties, comprising the steps of
Conveying the fluid mixture through a fluid chamber (3),
illuminating at least a portion of the fluid chamber (3),
imaging the radiation emitted from the section of the fluid chamber (3) with imaging optics (10, 12, 14) onto a digital camera (13) and a row array (15) of photosensitive detection elements, wherein a beam splitter (10) is used, to split the light emanating from the fluid chamber (3) into a first and a second beam portion, and wherein the digital camera (13) is arranged in the beam path of the first beam portion (11b), and the row array (15) is arranged in the beam path of the second beam portion (11b),
wherein the row array (15) is aligned so that the imaged flow direction extends in the direction of the row array (15), so that along the row array (15) a different light component from the second beam part falls on each of the photosensitive detection elements, which in each case originates from an associated subsection of the fluid chamber (3) which is limited in the flow direction,
wherein the digital camera (13) and the row array (15) and the imaging optics (10, 12, 14) are aligned to detect overlapping sections of the fluid chamber (3),
synchronised acquisition of images of the section of the fluid chamber (3) with a digital camera (13), and of signal data from the photosensitive sensing elements of the row array (15),
wherein the respectively simultaneously captured data of the digital camera (13) and the row array (15) are processed, wherein image sections of the image data captured with the digital camera (13) are assigned to individual photosensitive detection elements of the row array (15).

8. Method according to claim 7, wherein the illumination unit is controlled for synchronised illumination of the fluid chamber (3) with the simultaneous detection of the digital camera (13) and the row array (15).

9. Method according to claim 7 or 8, wherein the second beam portion (11b) is imaged onto the row array (15) with at least one cylindrical lens (14).

## Revendications

1. Dispositif de détection de particules dans des mélanges de fluides, les mélanges de fluides présentant au moins un fluide porteur et des particules entraînées dans celui-ci, le fluide porteur et les particules se distinguant par leurs propriétés optiques,
avec un dispositif d'alimentation (1) qui est disposé en amont d'une chambre à fluide (3) et qui transporte un mélange de fluides à travers la chambre à fluide (3) dans une direction d'écoulement (5),
avec un dispositif d'éclairage (6) qui éclaire au moins une partie de la chambre de fluide (3),
comprenant une caméra numérique (13) orientée pour détecter ladite au moins une partie de la chambre de fluide (3),
dans lequel au moins un diviseur de faisceau optique (10) est disposé en tant que composant d'une optique d'imagerie (10, 12, 14) entre la caméra numérique (13) et la chambre de fluide (3), le diviseur de faisceau (10) divisant la lumière provenant de la chambre de fluide (3) en une première partie de faisceau (11a) et une seconde partie de faisceau (11b),
la caméra numérique (13) étant disposée dans le trajet du faisceau de la première partie de faisceau (11b),
**caractérisé en ce que**
un réseau de lignes (15) d'éléments de détection photosensibles est disposé dans le trajet du faisceau de la deuxième partie de faisceau (11b),
le réseau de lignes (15) étant orienté de telle sorte que la direction d'écoulement (5a) représentée s'étend dans la direction du réseau de lignes (15), de sorte que le long du réseau de lignes (15), sur chacun des éléments de détection photosensibles, tombe une autre partie de lumière provenant de la deuxième partie de faisceau (11b), qui provient respectivement d'une section partielle associée, limitée dans la direction d'écoulement, de la chambre à fluide (3),
dans lequel la caméra numérique (13) et le réseau de lignes (15) et l'optique d'imagerie (10, 12, 14) sont alignés pour détecter des parties se chevauchant de la chambre de fluide (3),
la caméra numérique (13) et le réseau de lignes (15) étant couplés à un dispositif de commande (7) qui commande la caméra numérique (13) et le réseau de lignes (15) pour une détection simultanée,
le dispositif de commande (7) étant conçu pour traiter les données de la caméra numérique (13) et du réseau de lignes (15) saisies respectivement en même temps, des sections d'image des données d'image saisies avec la caméra numérique (13) étant associées à des éléments de saisie photosensibles individuels du réseau de lignes (15).

2. Dispositif selon la revendication 1, dans lequel le dispositif de commande (7) est couplé au dispositif d'éclairage (6) de telle sorte que le dispositif d'éclairage (6) est commandé pour l'éclairage synchronisé de la chambre à fluide (3) avec la détection simultanée de la caméra numérique (13) et du réseau de lignes (15).

3. Dispositif selon la revendication 1 ou 2, dans lequel le réseau de lignes (15) comporte des photodiodes comme éléments de détection photosensibles.

4. Dispositif selon la revendication 1 ou 2, dans lequel le réseau de lignes (15) comporte une caméra linéaire comme éléments de détection photosensibles.

5. Dispositif selon l'une des revendications précédentes, dans lequel l'optique d'imagerie (10, 12, 14) comporte, dans le trajet du faisceau de la deuxième partie de faisceau (11b), au moins une lentille cylindrique (14) pour l'imagerie sur le réseau de lignes (15).

6. Dispositif selon l'une des revendications précédentes, dans lequel la caméra numérique (13) et le réseau de lignes (15) et l'optique de représentation (10, 12, 14) sont orientés de telle sorte que la partie de la chambre à fluide (3) représentée sur le réseau de lignes (15) est entièrement saisie par la caméra numérique (13).

7. Procédé de détection de particules dans des mélanges de fluides, les mélanges de fluides présentant au moins un fluide porteur et des particules entraînées dans celui-ci, le fluide porteur et les particules se distinguant par leurs propriétés optiques, comprenant les étapes suivantes :
le transport du mélange de fluides à travers une chambre à fluide (3),
l'éclairage d'au moins une partie de la chambre de fluide (3),
imagerie du rayonnement émanant de la section de la chambre à fluide (3) avec une optique d'imagerie (10, 12, 14) sur une caméra numérique (13) et un réseau de lignes (15) d'éléments de détection photosensibles, en utilisant un diviseur de faisceau (10), pour diviser la lumière émanant de la chambre à fluide (3) en une première et une deuxième partie de faisceau, et dans lequel la caméra numérique (13) est disposée dans le trajet du faisceau de la première partie de faisceau (11b), et le réseau de lignes (15) est disposé dans le trajet du faisceau de la deuxième partie de faisceau (11b),
le réseau de lignes (15) étant orienté de telle sorte que la direction d'écoulement représentée s'étende dans la direction du réseau de lignes (15), de sorte que le long du réseau de lignes (15), sur chacun des éléments de détection photosensibles, tombe une autre partie de lumière provenant de la deuxième partie de faisceau, qui provient respectivement d'une section partielle associée, limitée dans la direction d'écoulement, de la chambre à fluide (3),
dans lequel la caméra numérique (13) et le réseau de lignes (15) et l'optique d'imagerie (10, 12, 14) sont alignés pour détecter des parties en chevauchement de la chambre de fluide (3),
l'acquisition synchronisée d'images de la section de la chambre à fluide (3) avec une caméra numérique (13), et de données de signal des éléments d'acquisition photosensibles du réseau de lignes (15),
les données de la caméra numérique (13) et du réseau de lignes (15) saisies respectivement en même temps étant traitées, des sections d'image des données d'image saisies par la caméra numérique (13) étant associées à des éléments de saisie photosensibles individuels du réseau de lignes (15).

8. Procédé selon la revendication 7, dans lequel l'unité d'éclairage est commandée pour éclairer de manière synchronisée la chambre à fluide (3) avec la détection simultanée de la caméra numérique (13) et du réseau de lignes (15) .

9. Procédé selon la revendication 7 ou 8, dans lequel la deuxième partie du faisceau (11b) est représentée sur le réseau de lignes (15) par au moins une lentille cylindrique (14) .
